Europäisches Patentamt

European Patent Office

Office européen des brevets

(19)

(11) **EP 1 684 442 A1**

(12) **EUROPEAN PATENT APPLICATION**
published in accordance with Art. 158(3) EPC

(43) Date of publication:
26.07.2006 Bulletin 2006/30

(51) Int Cl.:
*H04B 3/20* (2006.01)        *H04R 3/02* (2006.01)
*H04M 1/60* (2006.01)

(21) Application number: 03818969.2

(22) Date of filing: 11.11.2003

(86) International application number:
PCT/JP2003/014329

(87) International publication number:
WO 2005/046076 (19.05.2005 Gazette 2005/20)

(84) Designated Contracting States:
DE FR GB

(71) Applicant: MITSUBISHI DENKI KABUSHIKI
KAISHA
Chiyoda-ku, Tokyo 100-8310 (JP)

(72) Inventor: YANO, Atsuyoshi
c/o Mitsubishi Denki Kabushiki K
Tokyo 100-8310 (JP)

(74) Representative: Pfenning, Meinig & Partner GbR
Theresienhöhe 13
D-80339 München (DE)

(54) **ECHO SUPPRESSION DEVICE**

(57) An echo suppressing apparatus is provided with a ratio estimating means for decomposing a transmission signal u(t) which is echo-cancelled by an echo canceller 1 into subbands, and for estimating a ratio of an echo component to a signal component lying within each of the subbands, and calculates an amount of echo suppression eg(n) for each of the subbands from the ratio of the echo component to the signal component, which is estimated by the ratio estimating means, and subtracts the amount of echo suppression eg(n) from the signal component lying within each of the subbands. As a result, the echo suppressing apparatus can suppress a residual echo without causing degradation in the speech communication quality.

FIG.1

EP 1 684 442 A1

**Description**

Field of the Invention

The present invention relates to an echo suppressing apparatus which reduces a sound echo which occurs when a received signal outputted from a speaker is input to a microphone by way of an echo path.

Background of the Invention

A mobile phone or video conference equipment is equipped with an echo suppressing apparatus for the purpose of cancellation of a sound or channel echo which occurs in a communication line. A typical echo suppressing apparatus is provided with an adaptive filter for canceling an echo component, an echo suppressor for suppressing a residual echo component, and a false background-noise adding unit for superimposing false background noise onto a suppressed section of the residual echo.

Although the adaptive filter partially cancels an echo from the input signal into which an echo signal is mixed, a residual echo component is included in the echo-suppressed input signal since the adaptive filter cannot cancel the echo perfectly.

The echo suppressor suppresses the signal including the residual echo component, and outputs the echo-suppressed signal. However, since the echo suppressor also suppresses background noise as well as the echo, the background noise of the transmission signal is blocked partially and unnaturalness arises in the echo-suppressed transmission signal.

Therefore, the false background-noise addition unit analyzes the background noise of the signal which is yet to be echo-suppressed, generates false background noise, and adds the false background noise to the signal outputted from the echo suppressor. As a result, the sound in which the echo is reduced and which can be heard more naturally is transmitted to the distant end side.

As a technology for implementing the above-mentioned echo suppressor, an NLP (nonlinear processor) is known well, and, for example, a center clipper which is an example of the NLP has an advantage of blocking sounds having a signal level less than a predetermined threshold.

Since it is expected that the residual echo which is included in the transmission signal which is echo-suppressed by the adaptive filter has a relatively low signal level, the conventional echo suppressing apparatus can suppress most of the residual echo using a center clipper (refer to patent references 1 and 2).

However, since a center clipper having fixed input-output behavioral characteristics suppresses an input transmission signal when the level of the transmission signal is less than a predetermined threshold even when it can be certainly expected that any echo does not exist in the transmission signal, such as at the time of a single talk on the receive side, there is a profound effect of the suppression on the components other than the echo.

[Patent reference 1] JP,9-275367,A
[Patent reference 2] JP,2000-138619,A

A problem with the conventional echo suppressing apparatus constructed as mentioned above is that since while it can remove the unnaturalness due to the partially blocking of the background noise of the transmission signal, it cannot determine the boundary between any sound section of user's voice and any nonsound section correctly, and a part of the sound component becomes damaged because of the echo suppression processing using an NLP, there causes degradation in the speech communication quality, such as interruptions of the heads and ends of words included in the user's voice.

The present invention is made in order to solve the above-mentioned problem, and it is therefore an object of the present invention to provide an echo suppressing apparatus which can suppress a residual echo without causing degradation in the speech communication quality.

Disclosure of the Invention

An echo suppressing apparatus in accordance with the present invention is provided with a ratio estimating means for decomposing a transmission signal from which an echo replica signal is subtracted by an echo canceller into subbands, and for estimating a ratio of an echo component to a signal component lying within each of the subbands, and calculates an amount of echo suppression for each of the subbands from the ratio of the echo component to the signal component, which is estimated by the ratio estimating means, and subtracts the amount of echo suppression from the signal component lying within each of the subbands.

As a result, the echo suppressing apparatus can suppress a residual echo without causing degradation in the speech communication quality.

Brief Description of the Figures

Fig. 1 is a block diagram showing an echo suppressing apparatus in accordance with embodiment 1 of the present invention;

Fig. 2 is a flow chart showing processing carried out by a suppression subband determining unit;

Fig. 3 is a graphical representation showing an example of setting of a determination threshold;

Fig. 4 is an explanatory diagram showing a method of calculating an amount of suppression of an echo;

Fig. 5 is an explanatory diagram showing a result of the suppression of the echo;

Fig. 6 is a block diagram showing an echo suppressing apparatus in accordance with embodiment 2 of the present invention;

Fig. 7 is a flow chart showing a method of estimating an amount of coupling of an echo path; and

Fig. 8 is a block diagram showing an echo suppressing apparatus in accordance with embodiment 5 of the present invention.

Preferred Embodiments of the Invention

Hereafter, in order to explain this invention in greater detail, the preferred embodiments of the present invention will be described with reference to the accompanying drawings.

Embodiment 1.

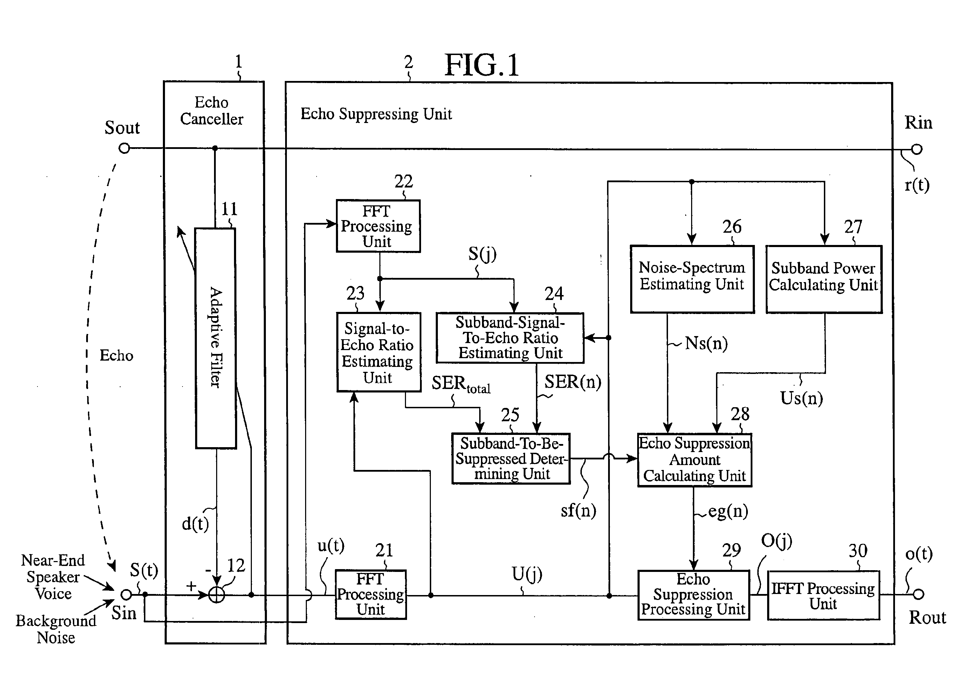

Fig. 1 is a block diagram showing an echo suppressing apparatus in accordance with embodiment 1 of the present invention. In the figure, the echo suppressing apparatus is provided with an echo canceller 1 and an echo suppressing unit 2.

An adaptive filter 11 of the echo canceller 1 generates an echo replica signal d(t) from a received signal r(t), and a subtractor 12 of the echo canceller 1 subtracts the echo replica signal d(t) from a transmission signal s(t) so as to carry out echo cancellation, and outputs an echo-cancelled transmission signal u(t).

An FFT processing unit 21 of the echo suppressing unit 2 performs an FFT (fast Fourier transform) process on the echo-cancelled transmission signal u(t), and outputs a Fourier spectrum U(j). Another FFT processing unit 22 performs an FFT process on the transmission signal s(t) in which any echo is yet to be cancelled, and outputs a Fourier spectrum S(j).

A signal-to-echo ratio estimating unit 23 estimates the ratio of the echo component to all signal components of the transmission signal s(t) in which any echo is yet to be cancelled from the Fourier spectra U(j) and S(j), and a subband-signal-to-echo ratio estimating unit 24 estimates the ratio of the echo component to the signal component lying within each subband (band) from the Fourier spectra U(j) and S(j). An estimating means is provided with the FFT processing units 21 and 22, signal-to-echo ratio estimating unit 23, and subband-signal-to-echo ratio estimating unit 24.

A subband-to-be-suppressed determining unit 25 determines a subband to be suppressed with reference to the estimation results obtained by the signal-to-echo ratio estimating unit 23 and subband-signal-to-echo ratio estimating unit 24. A noise-spectrum estimating unit 26 estimates a background-noise spectrum Nf(j) from the Fourier spectrum U(j) outputted from the FFT processing unit 21, and calculates a background-noise level Ns(n) from the background-noise spectrum Nf(j). A subband power calculating unit 27 calculates transmission-signal power Us(n) for each subband from the Fourier spectrum U(j) outputted from the FFT processing unit 21. An echo suppression amount calculating unit 28 calculates an amount of echo suppression eg(n) for the subband determined by the subband-to-be-suppressed determining unit 25 from the background-noise level Ns(n) and transmission-signal power Us(n) . An echo suppression processing unit 29 carries out an echo suppression process of subtracting the amount of echo suppression eg(n) calculated by the echo suppression amount calculating unit 28 from the Fourier spectrum U(j) outputted from the FFT processing unit 21. An echo suppression means is provided with the subband-to-be-suppressed determining unit 25, noise-spectrum estimating unit 26, subband power calculating unit 27, echo suppression amount calculating unit 28, and echo suppression processing unit 29.

An IFFT processing unit 30 constitutes a subband synthesizing means for performing an IFFT (inverse fast Fourier transform) process on a transmission signal spectrum O(j) on which the suppression processing is performed by the echo suppression processing unit 29 so as to output a transmission signal O(t) which is a time series signal.

Next, the operation of the echo suppressing apparatus in accordance with this embodiment of the present invention will be explained.

When receiving a signal r(t) delivered thereto via an Rin terminal, the adaptive filter 11 of the echo canceller 1 generates an echo replica signal d (t) from the received signal r(t) . When receiving the echo replica signal d(t) from the adaptive filter 11, the subtractor 12 of the echo canceller 1 subtracts the echo replica signal d(t) from a transmission signal s(t) in which an echo is superimposed onto a user voice signal including background noise so as to perform an echo cancellation process on the transmission signal. The subtractor 12 then outputs an echo-cancelled transmission signal u(t) to the echo suppressing unit 2.

When receiving the echo-cancelled transmission signal u(t) from the echo canceller 1, the FFT processing unit 21 of the echo suppressing unit 2 performs an FFT process on the echo-cancelled transmission signal u(t) to decompose the echo-cancelled transmission signal u(t) into several subbands, and outputs a Fourier spectrum U(j), where j is an index showing a frequency.

Furthermore, the other FFT processing unit 22 of the echo suppressing unit 2 performs an FFT process on the transmission signal s(t) in which any echo is yet to be cancelled to decompose the yet-to-be-echo-cancelled transmission signal s(t) into several subbands, and outputs a Fourier spectrum S(j).

When receiving the Fourier spectrum U(j) from the FFT processing unit 21 and also receiving the Fourier spectrum S(j) from the other FFT processing unit 22, the signal-to-echo ratio estimating unit 23 estimates the ratio of the echo component to all the signal components of the yet-to-be-echo-cancelled transmission signal s(t) from the Fourier spectra U(j) and S(j) . In other words, the signal-to-echo ratio estimating unit estimates the ratio $SER_{total}$ of the echo component included in the yet-to-be-echo-cancelled transmission signal s(t) to all the signal components of the yet-to-be-echo-cancelled transmission signal s(t) as follows:

$$SER_{total} = 10\log_{10}\left( \sum_{j=0}^{N-1}|S(j)|^2 \middle/ \left( \sum_{j=0}^{N-1}|S(j)|^2 - \sum_{j=0}^{N-1}|U(j)|^2 \right) \right) \tag{1}$$

where the reference numeral N denotes the number of FFT points.

When receiving the Fourier spectrum U(j) from the FFT processing unit 21 and also receiving the Fourier spectrum S (j) from the other FFT processing unit 22, the subband-signal-to-echo ratio estimating unit 24 estimates the ratio of the echo component to the signal component lying within each subband from the Fourier spectra U(j) and S(j). In other words, the subband-signal-to-echo ratio estimating unit estimates the ratio SER(n) of the echo component lying within each subband included in the yet-to-be-echo-cancelled transmission signal s(t) to the signal component lying within each subband as follows:

$$SER(n) = 10\log_{10}\left( \sum_{j=l_1[n]}^{l_2[n]}|S(j)|^2 \middle/ \left( \sum_{j=l_1[n]}^{l_2[n]}|S(j)|^2 - \sum_{j=l_1[n]}^{l_2[n]}|U(j)|^2 \right) \right) \qquad (n = 1, 2, \cdots, M) \tag{2}$$

where n is an index showing the number of each subband, $l_1(n)$ shows a start point on the frequency axis j of the n-th subband, and $l_2$ (n) shows an end point on the frequency axis j of the n-th subband, and reference numeral M denotes the number of the subbands.

When it is assumed that M = N, the following equation: $l_1(n) = l_2(n)$ (n= 1, 2, ..., M) is established, and the equation (2) is simplified as follows:

$$SER(j) = 10\log_{10}\left( |S(j)|^2 \middle/ \left( |S(j)|^2 - |U(j)|^2 \right) \right) \tag{3}$$

The equation (3) is the one for acquiring the ratio of the echo component lying within each subband to the signal component lying within each subband as a ratio of power spectra.

The subband-signal-to-echo ratio estimating unit can alternatively compare the echo replica signal d(t) generated by the adaptive filter 11 with the echo-cancelled transmission signal u(t) so as to estimate the ratio of the echo component lying within each subband to the signal component lying within each subband. In this case, the signal delivered to the FFT processing unit 22 is not the yet-to-be-echo-cancelled transmission signal s(t), but is the echo replica signal d(t) generated by the adaptive filter 11, and the signal output from the FFT processing unit 22 is a Fourier spectrum D (j) of the echo replica signal d(t).

In this case, the signal-to-echo ratio estimating unit estimates the ratio of the echo component included in the transmission signal s(t) to all the signal components of the transmission signal using the following equation (4):

$$SER_{total} = 10\log_{10}\left(\left(\sum_{j=0}^{N-1}|U(j)|^2 + \sum_{j=0}^{N-1}|D(j)|^2\right)\bigg/\sum_{j=0}^{N-1}|D(j)|^2\right) \qquad (4)$$

The subband-signal-to-echo ratio estimating unit estimates the ratio of the echo component lying within each subband to the signal component lying within each subband using the following equation (5):

$$SER(n) = 10\log_{10}\left(\left(\sum_{j=l_1[n]}^{l_2[n]}|U(j)|^2 + \sum_{j=l_1[n]}^{l_2[n]}|D(j)|^2\right)\bigg/\sum_{j=l_1[n]}^{l_2[n]}|D(j)|^2\right) \qquad (5)$$

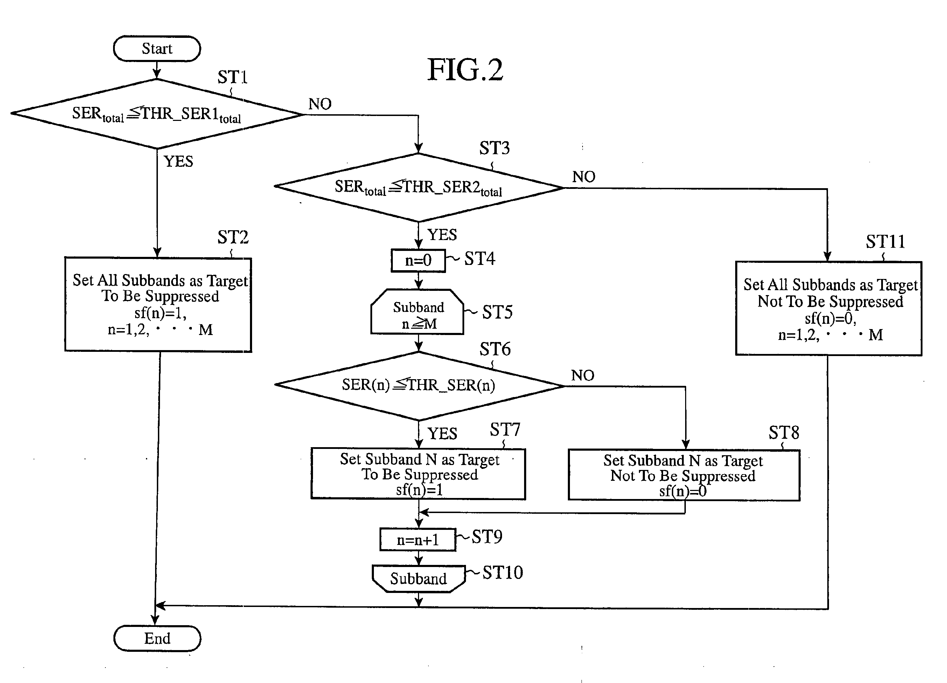

When the signal-to-echo ratio estimating unit 23 thus estimates the ratio $SER_{total}$ and the subband-signal-to-echo ratio estimating unit 24 estimates the ratio SER(n), the subband-to-be-suppressed determining unit 25 determines a subband to be suppressed with reference to the ratio $SER_{total}$ and ratio SER(n). To be more specific, the subband-to-be-suppressed determining unit determines a subband to be suppressed as follows. Fig. 2 is a flow chart showing processing carried out by the subband-to-be-suppressed determining unit.

First, the subband-to-be-suppressed determining unit 25 compares the ratio $SER_{total}$ estimated by the signal-to-echo ratio estimating unit 23 with a first suppression mode determination threshold $THE\_SER1_{total}$ so as to determine whether or not the following equation (6) is established (in step ST1).

$$SER_{total} \leqq THR\_SER1_{total} \qquad (6)$$

Since the ratio of the echo component included in the whole transmission signal to all the signal components of the whole transmission signal is high and the influence of a residual echo is large when the equation (6) is established, the subband-to-be-suppressed determining unit 25 sets all suppression determination flags sf(n) to "1" so as to set all the subbands as a target to be suppressed (in step ST2). In other words, the subband-to-be-suppressed determining unit sets sf(n) (n= 1, 2, ..., M) to 1.

On the other hand, when the equation (6) is not established, the subband-to-be-suppressed determining unit compares the ratio $SER_{total}$ estimated by the signal-to-echo ratio estimating unit 23 with a second suppression mode determination threshold $THE\_SER2_{total}$ so as to determine whether or not the following equation (7) is established (in step ST3).

$$SER_{total} \leqq THR\_SER2_{total} \qquad (7)$$

Since the ratio of the echo component included in the whole transmission signal to all the signal components of the whole transmission signal is low and the influence of the residual echo is small when the equation (7) is not established, the subband-to-be-suppressed determining unit 25 sets all the suppression determination flags sf(n) to "0" so as to set all the subbands as a target not to be suppressed (in step ST11). In other words, the subband-to-be-suppressed determining unit sets sf(n) (n= 1, 2, ..., M) to 0.

Since there is a possibility that the ratio of the echo component included in each of some subbands to the signal component of each of the subbands is high when the equation (7) is established, the subband-to-be-suppressed determining unit 25 initializes a variable n showing a certain subband to "0" (in step ST4), and compares the ratio SER(n) estimated by the subband-signal-to-echo ratio estimating unit 24 with the subband suppression determination threshold THR_SER(n) so as to determine whether or not the following equation (8) is established (in step ST6).

$$SER(n) \leqq THR\_SER(n) \qquad (8)$$

Since the ratio of the echo component included in the subband n to the signal component lying with the subband is high when the equation (8) is established, the subband-to-be-suppressed determining unit 25 sets the suppression determination flag sf (n) to "1" so as to determine the subband n as a target to be suppressed (in step ST7).

Since the ratio of the echo component included in the subband n to the signal component lying within the subband is low when the equation (8) is not established, the subband-to-be-suppressed determining unit sets the suppression determination flag sf (n) to "0" so as to determine the subband n as a target not to be suppressed (in step ST8).

The subband-to-be-suppressed determining unit 25 then increments the variable n by "1" (in step ST9), and repeatedly carries out the processing in steps ST5 to ST10 until n>=M is established.

The subband suppression determination threshold THR_SER (n) used in step ST6 can be uniquely determined for all the possible values of n. As an alternative, an individual value can be determined for each of all the possible values of n according to the echo suppression ability of the echo canceller 1.

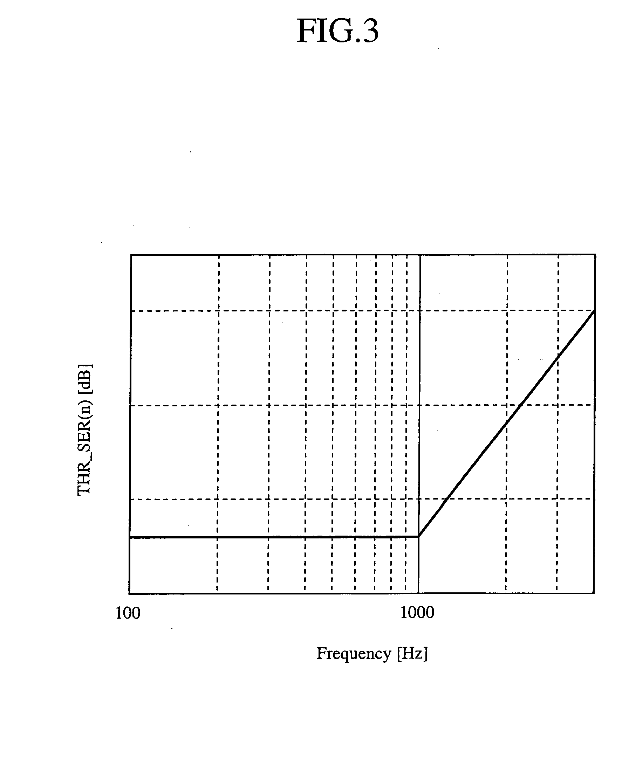

In general, when the adaptive filter 11 which is implemented via an LMS algorithm is applied to an echo canceling process performed on a signal which mainly has a sound signal, it is known that a residual echo easily remains in a high-frequency range of the signal. This is because such a sound signal does not have a flat spectrum, but has a high-frequency range having smaller signal power than that of a low-frequency range, and therefore the precision of estimation of an echo path for the high-frequency range is inferior to that of estimation of an echo path for the low-frequency range and a nonlinear echo component is concentrated on the high-frequency range. In this case, it can be expected that the echo suppressing effect is improved by setting the threshold to a higher value especially for the high-frequency range. The graph of Fig. 3 shows an example of such the setting of the subband suppression determination threshold THR_SER(n).

Then, when receiving the Fourier spectrum U(j) from the FFT processing unit 21, the noise-spectrum estimating unit 26 estimates a background-noise spectrum Nf(j) from the Fourier spectrum U(j), and also calculates a background-noise level Ns(n) from the background-noise spectrum Nf(j).

As a method of estimating the background-noise spectrum Nf(j), a method of calculating an average noise spectrum, as disclosed in JP,2000-347688,A, is provided as a suitable example. The noise-spectrum estimating unit calculates an estimated background-noise level Ns(n) from the background-noise spectrum Nf(j) according to the following equation (9):

$$Ns(n) = 10\log_{10}\left( \sum_{j=l_1(n)}^{l_2(n)} |Nf(j)|^2 \right) [\text{dB}] \qquad (9)$$

When receiving the Fourier spectrum U(j) from the FFT. processing unit 21, the subband power calculating unit 27 calculates the transmission-signal power Us(n) of each subband by substituting the Fourier spectrum U(j) into the following equation (10) :

$$Us(n) = 10\log_{10}\left( \sum_{j=l_1(n)}^{l_2(n)} |U(j)|^2 \right) [\text{dB}] \qquad (10)$$

When the noise-spectrum estimating unit 26 calculates the background-noise level Ns(n) and the subband power calculating unit 27 calculates the transmission-signal power Us (n) of each subband, the echo suppression amount calculating unit 28 calculates the amount of echo suppression eg(n) for the subband which is determined as a target to be suppressed by the subband-to-be-suppressed determining unit 25 by substituting the background-noise level Ns(n) and the transmission-signal power Us(n) of each subband into the following equation (11):

$$eg(n) = sf(n) \cdot \max\big(Ns(n) - Us(n), 0\big) \qquad (1\,1)$$

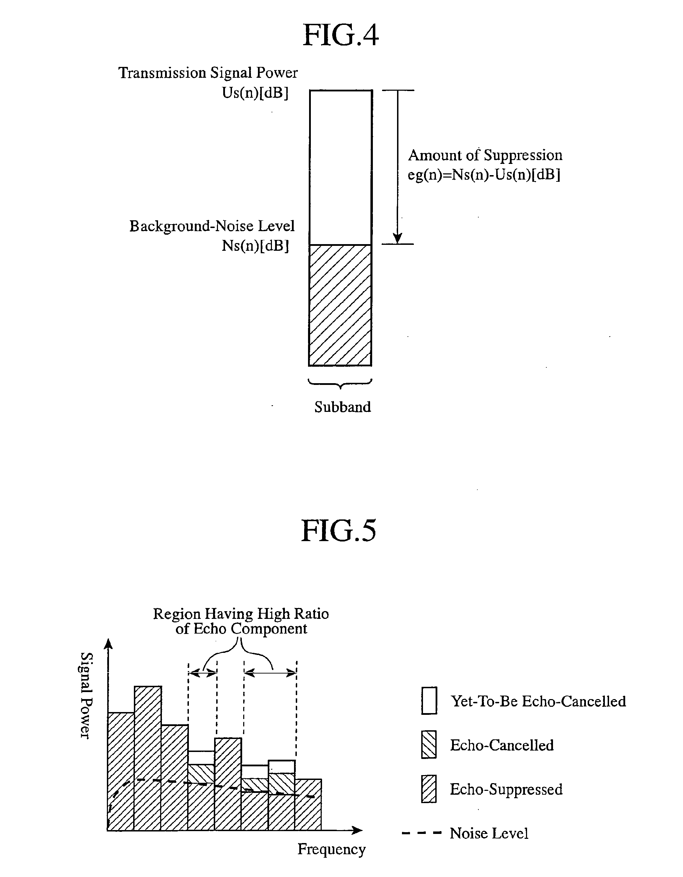

As shown in Fig. 4, the amount of echo suppression calculated by the echo suppression amount calculating unit 28 is calculated as an amount which reduces the level of a transmission signal lying within the subband to be suppressed to the background-noise level Ns(n) estimated by the noise-spectrum estimating unit 26.

When the echo suppression amount calculating unit 28 calculates the amount of echo suppression eg(n) for the subband to be suppressed, the echo suppression processing unit 29 substitutes the amount of echo suppression eg(n) into the following equation (12) so as to carry out the echo suppression processing, and outputs the spectrum O (j) of the echo-suppressed transmission signal.

$$O(j) = 10^{eg(f(j))/20} U(j) \qquad (1\,2)$$

where f(j) is a function for outputting the index n of the subband within which the frequency j falls.

As a result, the level of the signal component lying within any subband in which the ratio of the echo component to the signal component is high is reduced to the background-noise level, as shown in Fig. 5. When all the subbands are determined as the target to be suppressed, the spectrum O(j) of the echo-suppressed transmission signal has a shape which is nearly close to that of the background-noise spectrum.

When the echo suppression processing unit 29 carries out the echo suppression_processing, the IFFT processing unit 30 performs an IFFT process on the spectrum O(j) of the echo-suppressed transmission signal, and outputs a transmission signal O(t) which is a time series signal.

As can be seen from the above description, the echo suppressing apparatus in accordance with this embodiment 1 includes the ratio estimating means for decomposing a transmission signal u(t) which is echo-cancelled by the echo canceller 1, and for estimating the ratio of the echo component of each subband to the signal component lying within each subband, and is so constructed as to calculate an amount of echo suppression eg(n) for each subband from the ratio of the echo component of each subband to the signal component lying within each subband, which is estimated by the ratio estimating means, and to subtract the amount of echo suppression eg(n) from the signal component lying within each subband. Therefore, the present embodiment offers an advantage of being able to suppress the residual echo without causing degradation in the speech communication quality.

In other words, since the echo suppressing apparatus in accordance with this embodiment selects only a subband in which the ratio of the echo component to the signal component is high and performs the suppression processing on only the subband, it can suppress the residual echo while keeping the voice quality without harming the user voice component included in the transmission signal, especially the or the ending.

Furthermore, the echo suppressing apparatus in accordance with this embodiment 1 checks to see the ratio of the echo component included in the whole transmission signal to all the signal components, determines, as the target to be suppressed, all the subbands for a time period during which the ratio of the echo component to all the signal components is especially high, and performs the suppression processing on all the subbands. Therefore, the echo suppressing apparatus in accordance with this embodiment 1 has a great effect of suppressing the echo at a time of a single talk on the reception side.

In addition, the echo suppressing apparatus in accordance with this embodiment 1 suppresses the signal component of each subband to the background-noise level, but does not carry out the suppression processing in such a manner that the signal component of each subband falls below the background-noise level. Therefore, the echo suppressing apparatus in accordance with this embodiment 1 provides another advantage of being able to suppress the residual echo without causing intermittence in the background noise. Furthermore, since it is not necessary to separately install an apparatus for adding false background noise to the signal outputted from the echo suppressor as the next stage of the echo suppressing apparatus, the scale of calculations can be simplified.

In addition, the echo suppressing apparatus in accordance with this embodiment 1 refers to the transmission signal u(t) which is echo-cancelled by the echo canceller 1 when estimating the ratio of the echo component to all the signal components of the transmission signal. Therefore, the echo suppressing apparatus in accordance with this embodiment 1 provides a further advantage of being able to provide a high degree of estimation precision with a relatively small scale of calculations.

Furthermore, the echo suppressing apparatus in accordance with this embodiment 1 sets a threshold used for determination of a subband to be suppressed for each subband. Therefore, the echo suppressing apparatus in accordance with this embodiment 1 provides a still further advantage of being able to adjust the threshold so that the suppression acts effectively on a subband in which a residual echo component easily occurs.

Embodiment 2.

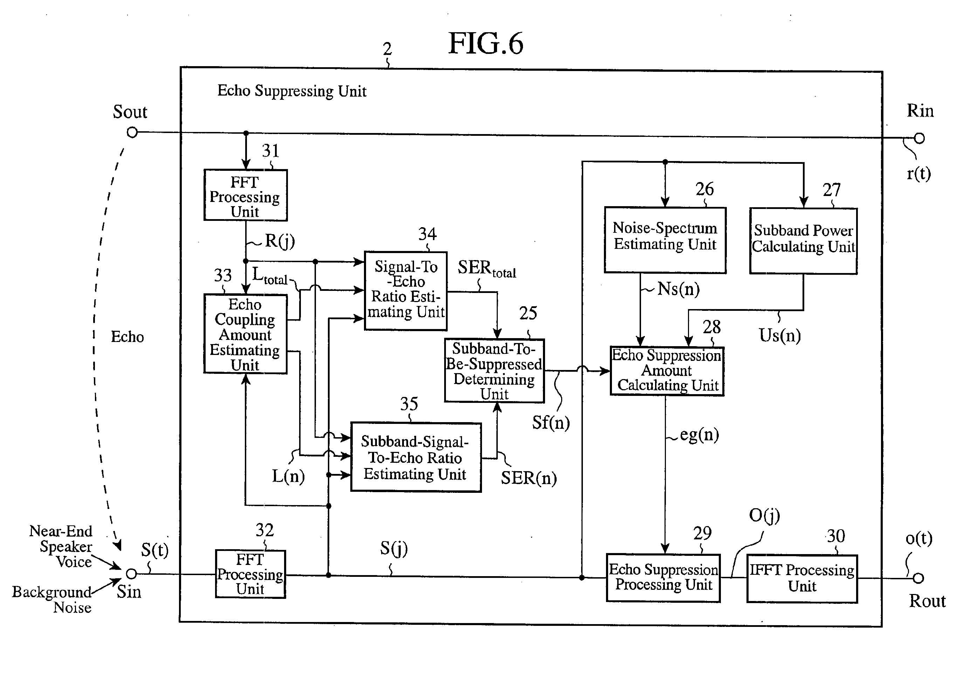

Fig. 6 is a block diagram showing an echo suppressing apparatus in accordance with embodiment 2 of the present invention. In the figure, the same reference numerals as shown in Fig. 1 denote the same components as those of embodiment 1 or like components, and therefore the explanation of the components will be omitted hereafter.

An FFT processing unit 31 performs an FFT process on a received signal r(t) and outputs a Fourier spectrum R(j), and another FFT processing unit 32 performs an FFT process on a transmission signal s(t) and outputs a Fourier spectrum S(j). An echo coupling amount estimating unit 33 estimates a total amount $L_{total}$ of echo coupling and an amount of echo coupling L (n) for each subband from the Fourier spectra R(j) and S(j). A signal-to-echo ratio estimating unit 34 estimates the ratio of the echo component to all the signal components of the transmission signal s(t) from the total amount $L_{total}$ of echo coupling estimated by the echo coupling amount estimating unit 33, and a subband-signal-to-echo ratio estimating unit 35 estimates the ratio of the echo component to the signal component of each subband from the amount of echo coupling L (n) for each subband, which is estimated by the echo coupling amount estimating unit 33. A ratio estimating means is provided with the FFT processing units 31 and 32, echo coupling amount estimating unit 33, signal-to-echo ratio estimating unit 34, and subband-signal-to-echo ratio estimating unit 35.

Next, the operation of the echo suppressing apparatus in accordance with this embodiment of the present invention will be explained.

The echo suppressing apparatus in accordance with above-mentioned embodiment 1 compares the yet-to-be-echo-canceled transmission signal s(t) with the transmission signal u(t) which is already echo-canceled by the echo canceller 1, or compares the echo replica signal d(t) generated by the adaptive filter 11 with the transmission signal u(t) which is already echo-canceled by the echo canceller, so as to estimate the ratio of the echo component to all the signal components included in the transmission signal s(t), as previously mentioned. On the other hand, the echo suppressing apparatus in accordance with this embodiment can estimate the amount of echo coupling of an echo path by comparing a received signal r(t) with a transmission signal s(t), so as to estimate the ratio of the echo component to all the signal components included in the transmission signal s(t) from the amount of echo coupling.

Specifically, the echo suppressing apparatus in accordance with this embodiment operates as follows:

First, when receiving a received signal r(t) from an Rin terminal, the FFT processing unit 31 performs an FFT process on the received signal r(t) and outputs a Fourier spectrum R(j) .

Similarly, when receiving a transmission signal s(t) from an Sin terminal, the other FFT processing unit 32 performs an FFT process on the transmission signal s(t) and outputs a Fourier spectrum S(j).

When receiving the Fourier spectrum R(j) from the FFT processing unit 31 and also receiving the Fourier spectrum S(j) from the other FFT processing unit 32, the echo coupling amount estimating unit 33 estimates the total amount $L_{total}$ of echo coupling and amount of echo coupling L(n) for each subband from the Fourier spectra R(j) and S(j).

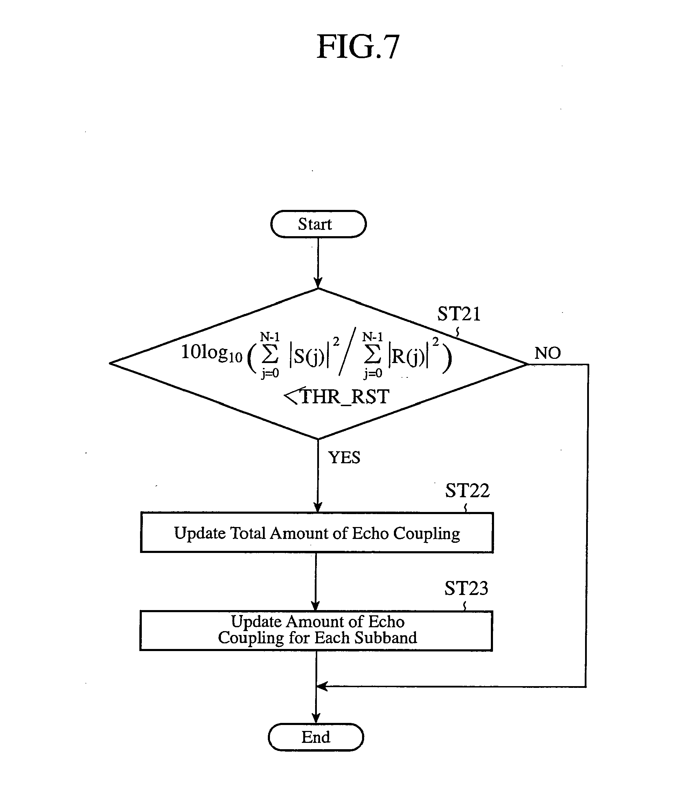

In other words, the echo coupling amount estimating unit 33 determines whether the difference between the signal power of the received signal r(t) and that of the whole transmission signal s(t) is more than a predetermined threshold THR_RST according to the following equation (13), in order to compare the signal power of the received signal r(t) with that of the whole transmission signal s(t) (in step ST21 of Fig. 7).

$$10\log_{10}\left(\sum_{j=0}^{N-1}|S(j)|^2 \middle/ \sum_{j=0}^{N-1}|R(j)|^2\right) < THR\_RST \qquad (13)$$

where THR_RST is the threshold for determining whether or not the current talk state is a single talk on the receive side.
When the equation (13) is established, the echo coupling amount estimating unit 33 updates the total amount $L_{total}$ of echo coupling as follows (in step ST22).

$$L_{total} = \alpha \cdot L'_{total} + (1-\alpha) \cdot 10\log_{10}\left(\sum_{j=0}^{N-1}|S(j)|^2 \middle/ \sum_{j=0}^{N-1}|R(j)|^2\right) \ [dB] \qquad (14)$$

where alpha is a coefficient for determining an update rate at which the updating is done and is defined as a constant which satisfies 0< alpha<1. Furthermore, L'$_{total}$ is the total amount of echo coupling which is yet to be updated, and it is assumed that a value which is sufficiently smaller than the actual amount of echo coupling in a target to which the echo suppressing apparatus is applied is set as an initial value of the amount $L_{total}$ of echo coupling.

Then, the echo coupling amount estimating unit 33 updates the amount of echo coupling L(n) for each subband as follows (in step ST23).

$$L(n) = \alpha \cdot L'(n) + (1-\alpha) \cdot 10\log_{10}\left( \sum_{j=l_1(n)}^{l_2(n)} |S(j)|^2 \Big/ \sum_{j=l_1(n)}^{l_2(n)} |R(j)|^2 \right) \quad [dB] \qquad (15)$$

It is also assumed that a value which is sufficiently smaller than the actual amount of echo coupling in the target to which the echo suppressing apparatus is applied is set as an initial value of the amount of echo coupling L(n) for each subband.

When the equation (13) is not established, the echo coupling amount estimating unit 33 does not update the amount of echo coupling.

When the echo coupling amount estimating unit 33 estimates the total amount $L_{total}$ of echo coupling, the signal-to-echo ratio estimating unit 34 substitutes the total amount $L_{total}$ of echo coupling into the following equation (16) so as to estimate the ratio of the echo component to all the signal components of the transmission signal s(t) as $SER_{total}$.

$$SER_{total} = 10\log_{10}\left( \sum_{j=0}^{N-1} |S(j)|^2 \right) - \left( 10\log_{10}\left( \sum_{j=0}^{N-1} |R(j)|^2 \right) + L_{total} \right) \quad [dB] \qquad (16)$$

When the echo coupling amount estimating unit 33 estimates the amount of echo coupling L(n) for each subband, the subband-signal-to-echo ratio estimating unit 35 substitutes the amount of echo coupling L(n) for each subband into the following equation (17) so as to estimate the ratio of the echo component to the signal component lying within each subband as SER(n).

$$SER(n) = 10\log_{10}\left( \sum_{j=l_1[n]}^{l_2[n]} |S(j)|^2 \right) - \left( 10\log_{10}\left( \sum_{j=l_1[n]}^{l_2[n]} |R(j)|^2 \right) + L(n) \right) \quad [dB] \qquad (17)$$

where n= 1, 2, ..., M.

Since processes carried out by the subband-to-be-suppressed determining unit 25 through the IFFT processing unit 30 are the same as those of the above-mentioned embodiment 1, the explanation of the processes will be omitted hereafter.

As can be seen from the above description, this embodiment 2 offers an advantage of being able to suppress the residual echo without causing degradation in the speech communication quality, like above-mentioned embodiment 1 even when the echo canceller 1 using the adaptive filter 11 does not exist as a previous stage of the echo suppressing apparatus, or even when the echo suppressing apparatus is simply connected in series with the echo canceller 1.

In other words, since the echo suppressing apparatus of this embodiment estimates the amount of coupling of the echo path from the received signal r(t) and transmission signal s(t), multiplies a signal lying within each of subbands into which the received signal is decomposed by the amount of coupling, and compares the signal lying within each of subbands multiplied by the amount of coupling with a signal lying within each of subbands into which the transmission signal is decomposed so as to estimate the ratio of the echo component to the signal component of each subband, the present embodiment offers another advantage of being able to estimate the ratio of the echo component to the signal component of each subband even when the echo canceller 1 using the adaptive filter 11 does not exist as a previous stage of the echo suppressing apparatus, or even when the echo suppressing apparatus is simply connected in series with the echo canceller 1.

In addition, according to this embodiment 2, since the echo suppressing apparatus calculates the amount of coupling of the echo path from the power spectra of the signals transmitted between the transmit and receive sides, the present embodiment offers a further advantage of being able to prevent the estimation of the amount of coupling from being easily affected by variations in the power on the spectrum of the input voice, thereby providing a high degree of estimation precision even for a high-frequency region in which the signal level is relatively low.

Embodiment 3.

The echo suppressing apparatus in accordance with above-mentioned embodiment 1 calculates, as the amount of echo suppression eg (n) for each subband, a value for suppressing the current level of the transmission signal to the background-noise level, as previously mentioned. As an alternative, the echo suppressing apparatus can calculate the amount of echo suppression eg(n) for each subband according to the magnitude of the ratio of the echo component to the signal component lying within each subband.

As a result, the echo suppressing apparatus in accordance with this embodiment 3 carries out suppression processing according to SER (n) showing the ratio of the echo component to the signal component lying within each subband even if SER (n) showing the ratio of the echo component to the signal component lying within each subband does not exceed a predetermined threshold THR_SER (n), while the echo suppressing apparatus in accordance with this embodiment 1 carries out the echo suppression processing when SER(n) showing the ratio of the echo component to the signal component lying within each subband exceeds the predetermined threshold THR_SER(n).

The echo suppressing apparatus in accordance with this embodiment 3 performs the suppression processing concretely as follows:

In accordance with this embodiment 3, the echo suppression amount calculating unit 28 uses the following equation (18) instead of the equation (11) so as to calculate the amount of echo suppression eg(n).

$$eg(n) = \begin{cases} sf(n) \cdot \max\big(SER(n) - THR\_SER(n) + Ns(n) - Us(n), 0\big) & SER(n) \geqq THR\_SER(n) \\ sf(n) \cdot \max\big(Ns(n) - Us(n), 0\big) & SER(n) < THR\_SER(n) \end{cases}$$

$$(1\ 8)$$

In the equation (18), when SER(n) is smaller than the threshold THR_SER(n), the echo suppression amount calculating unit calculates the amount of suppression which is the same as the amount of suppression calculated using the equation (11), while, when SER(n) is equal to or larger than the threshold THR_SER (n), it calculates the amount of suppression eg (n) which reduces the echo component by an excess amount by which SER (n) exceeds the threshold THR_SER(n).

As can be seen from the above description, even when the ratio of the echo component to the signal component lying within each subband is relatively small, the echo suppressing apparatus according to this embodiment 3 carries out the echo suppression by adjusting the amount of suppression according to the ratio. Therefore, even under conditions that the echo suppression cannot be carried out by the echo suppressing apparatus according to above-mentioned embodiment 1, the echo suppressing apparatus according to this embodiment 3 can carry out the echo suppression and can improve the effect of suppressing the echo.

In addition, the echo suppressing apparatus according to this embodiment 3 can carry out the echo suppression processing without causing intermittence in the background noise by defining, as the upper limit of the amount of suppression which is determined according to the magnitude of the ratio of the echo component to the signal component lying within each subband, a value for suppressing the current level of the transmission signal to the background-noise level. Furthermore, since it is not necessary to add false background noise to the next stage of the echo suppressing apparatus, the scale of calculations can be reduced.

Embodiment 4.

The echo suppressing apparatus in accordance with above-mentioned embodiment 1 performs the suppression processing on the echo component by determining the amount of suppression eg(n) which reduces the average signal level of a subband to be suppressed to the background-noise level, as previously mentioned. As an alternative, the echo suppressing apparatus can carry out the suppression processing so that the amplitude spectrum of a subband to be suppressed becomes flattened within the subband.

In other words, the echo suppressing apparatus in accordance with this embodiment 4 calculates the amount of echo suppression for each sample on the Fourier spectrum, instead of calculating the amount of echo suppression for each subband.

For example, the echo suppressing apparatus determines the amount of suppression eg(j) so that the power of the subband to be suppressed becomes equal to the average power of the background noise in the same subband, and the absolute value of each sample becomes equal to a constant value.

$$eg(j) = 10\log_{10}\left(\frac{1}{|U(j)|^2}\left(10^{Ns(f(j))/10}/ls(f(j))\right)\right) \quad [dB] \qquad (19)$$

where ls (n) shows the number of samples of the Fourier spectrum of a subband n.

The echo suppressing apparatus according to this embodiment 4 flattens the spectrum of the subband to be suppressed. Therefore, the present embodiment offers an advantage of being able to reduce the feeling of audibly feeling the residual echo as compared with the case where a uniform gain is provided.

Embodiment 5.

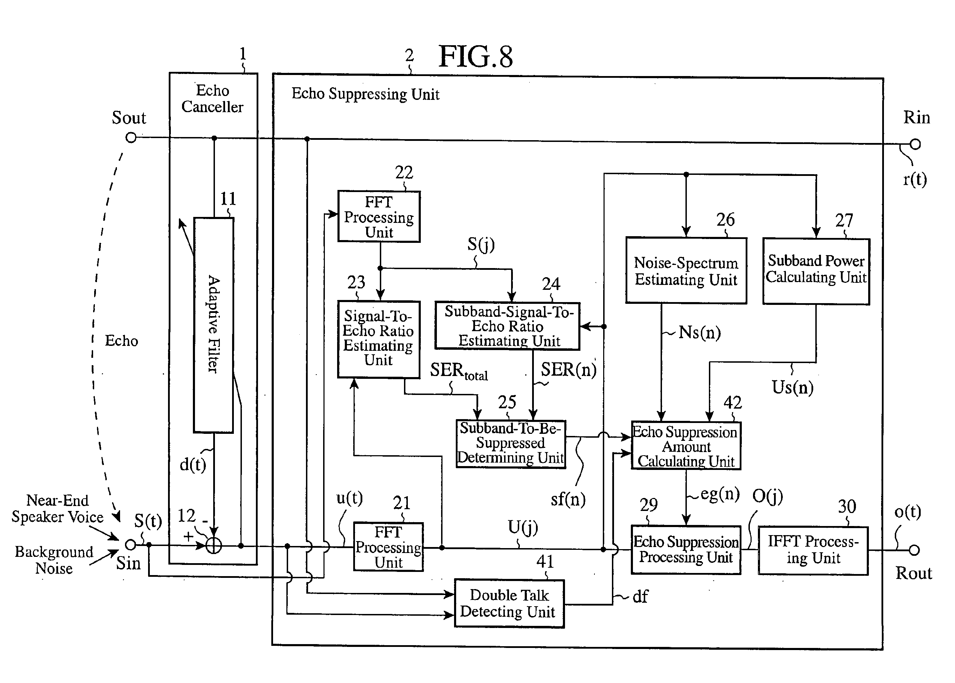

Fig. 8 is a block diagram showing an echo suppressing apparatus in accordance with embodiment 5 of the present invention. In the figure, the same reference numerals as shown in Fig. 1 denote the same components or like components, and therefore the explanation of the components will be omitted hereafter.

A double talk detecting unit 41 carries out a detection process of detecting a double talk. While an echo suppression amount calculating unit 42 calculates the amount of echo suppression, like the echo suppression amount calculating unit 28 of Fig. 1, and makes the amount of echo suppression for a section in which the double talk is detected be smaller than that for a section in which no double talk is detected when the double talk detecting unit 41 detects the double talk. The double talk detecting unit 41 and echo suppression amount calculating unit 42 constitutes an echo suppressing means.

Next, the operation of the echo suppressing apparatus in accordance with this embodiment of the present invention will be explained.

The echo suppressing apparatus in accordance with this embodiment 5 differs from that of above-mentioned embodiment 1 in that it has the double talk detecting unit 41 which carries out the detection process of detecting a double talk, and the echo suppression amount calculating unit 42 makes the amount of echo suppression for a section in which the double talk is detected be smaller than that for a section in which no double talk is detected.

In other words, the double talk detecting unit 41 calculates the difference between the power of an echo-canceled transmission signal u(t) which is outputted from a subtractor 12 of an echo canceller 1 with a received signal r(t) so as to determine whether the difference exceeds a predetermined threshold THR_DT according to the following equations (20):

$$10\log_{10}\left(\sum_{j=0}^{N-1}|s(t)|^2 \Big/ \sum_{j=0}^{N-1}|r(t)|^2\right) > THR\_DT \qquad (20)$$

where THR_DT is the threshold for detecting a double talk.

When the equation (20) is established, the double talk detecting unit 41 determines that the current talk state is a double talk, and outputs a double talk flag df=1.

On the other hand, when the equation (20) is not established, the double talk detecting unit 41 outputs a double talk detection flag df=0.

While the echo suppression amount calculating unit 42 calculates the amount of echo suppression eg(n) for the non-detection section for which the double talk detecting unit 41 has not detected any double talk, like the echo suppression amount calculating unit 28 of Fig. 1, it makes the amount of echo suppression eg(n) for the detection section in which the double talk is detected be smaller than that for the non-detection section when the double talk detecting unit 41 has detected the double talk.

In other words, the echo suppression amount calculating unit 42 calculates the amount of echo suppression eg(n) by substituting the double talk detection flag df into the following equation (21):

$$eg(n) = (1-df) \cdot sf(n) \cdot \max(Ns(n) - Us(n), 0) \qquad (21)$$

In the case of the equation (21), the amount of echo suppression eg (n) for the detection section in which the double talk is detected becomes zero. As an alternative, the following inequality: 0<df<1 can be provided and the amount of echo suppression eg(n) for the detection section can be made to be smaller than that for the non-detection section.

As can be seen from the above description, since the echo suppressing apparatus according to this embodiment 5 makes the amount of echo suppression eg(n) for the detection section in which a double talk is detected be smaller than that for the non-detection section in which no double talk is detected. Therefore, the present embodiment offers an advantage of being able to suppress the degradation in the sending speech quality in the detection section in which a double talk is detected.

In accordance with this embodiment 5, the double talk detecting unit 41 detects a double talk based on the difference between the power of the transmission signal u(t) which is echo-canceled with that of the received signal r (t) . However, the method of detecting a double talk is not limited to the above-mentioned method and the parameter for detection is not limited to the power difference.

Industrial Applicability

As mentioned above, the echo suppressing apparatus in accordance with the present invention is suitable for use in voice communications using a vehicle-mounted telephone, mobile phone or the like, in which there is a necessity to improve the speech communication quality by reducing a sound echo which occurs when a received signal outputted from a speaker is input to a microphone by way of an echo path.

**Claims**

1. An echo suppressing apparatus comprising: an echo canceller for generating an echo replica signal from a received signal, and for subtracting the echo replica signal from a transmission signal; a ratio estimating means for decomposing the transmission signal from which the echo replica signal is subtracted by said echo canceller into subbands, and for estimating a ratio of an echo component to a signal component lying within each of the subbands; an echo suppressing means for calculating an amount of echo suppression for each of the subbands from the ratio of the echo component to the signal component, which is estimated by said ratio estimating means, and for subtracting the amount of echo suppression from the signal component lying within each of the subbands; and a band synthesizing means for transforming the signal component lying within each of the subbands, from which the amount of echo suppression is subtracted by said echo suppressing means, back to a time series signal, and for outputting the time series signal as a transmission signal.

2. The echo suppressing apparatus according to Claim 1, **characterized in that** the ratio estimating means decomposes either the transmission signal or the echo replica signal into subbands, and estimates the ratio of the echo component to the signal component lying within each of the subbands using signals lying within the subbands.

3. The echo suppressing apparatus according to Claim 1, **characterized in that** when the ratio of the echo component to the signal components lying within all the subbands is larger than a first reference value, the echo suppressing means calculates the amount of echo suppression for each of all the subbands, and, when the ratio of the echo component to the signal components lying within all the subbands is smaller than the first reference value, calculates only the amount of echo suppression for a subband in which the ratio of the echo component to the signal component lying within the subband is larger than a second reference value.

4. The echo suppressing apparatus according to Claim 1, **characterized in that** the echo suppression means compares the ratio of the echo component to the signal component lying within the subband with the second reference value using the second reference value which is prepared for each of the subbands.

5. An echo suppressing apparatus comprising: a background-noise level estimating means for decomposing a transmission signal into subbands, and for estimating a background-noise level for each of the subbands from a signal component lying within each of the subbands; an echo suppression means for calculating an amount of echo suppression for each of the subbands from the background-noise level for each of the subbands, which is estimated by said background-noise level estimating means, and for subtracting the amount of echo suppression from the signal component lying within each of the subbands; and a band synthesizing means for transforming the signal component lying within each of the subbands, from which the amount of echo suppression is subtracted by said echo suppressing means, back to a time series signal, and for outputting the time series signal as a transmission signal.

6. The echo suppressing apparatus according to Claim 5, **characterized in that** the echo suppressing means calculates the amount of echo suppression which makes the signal component lying within each of the subbands, from which the amount of echo suppression is subtracted, have the background-noise level for each of the subbands.

7. An echo suppressing apparatus comprising: a ratio estimating means for decomposing a transmission signal into subbands, and for estimating a ratio of an echo component to a signal component lying within each of the subbands; an echo suppressing means for calculating an amount of echo suppression for each of the subbands from the ratio of the echo component to the signal component, which is estimated by said ratio estimating means, and for subtracting the amount of echo suppression from the signal component lying within each of the subbands; and a band synthesizing means for transforming the signal component lying within each of the subbands, from which the amount of echo suppression is subtracted by said echo suppressing means, back to a time series signal, and for outputting the time series signal as a transmission signal.

8. The echo suppressing apparatus according to Claim 7, **characterized in that** the ratio estimating means decomposes a received signal into subbands, and estimates the ratio of the echo component to the signal component lying within each of the subbands using received signals lying within the subbands.

9. The echo suppressing apparatus according to Claim 8, **characterized in that** the ratio estimating means estimates an amount of coupling of an echo path from the received signal and the transmission signal, multiplies the received signals lying within the subbands by the amount of coupling, compares the received signals lying within the subbands which are multiplied by the amount of coupling with transmission signals lying within the subbands, and estimates the ratio of the echo component to the signal component lying within each of the subbands.

10. The echo suppressing apparatus according to Claim 9, **characterized in that** the ratio estimating means estimates the amount of coupling of the echo path when detecting a single talk on a receive side from the received signal.

11. The echo suppressing apparatus according to Claim 9, **characterized in that** the echo suppressing means calculates the amount of echo suppression according to band according to the magnitude of the ratio of the echo component to the signal component of each band.

12. The echo suppressing apparatus according to Claim 9, **characterized in that** when the ratio of the echo component to the signal component lying within a certain one of the subbands exceeds a predetermined threshold, the echo suppressing means flattens a spectrum of the signal component lying within the certain band.

13. The echo suppressing apparatus according to Claim 9, **characterized in that** the echo suppressing means has a function of detecting a double talk, and reduces the amount of echo suppression for a section in which a double talk is detected compared with that for a section in which no double talk is detected.

FIG.1

# FIG.2

Start

ST1 — $SER_{total} \leq THR\_SER1_{total}$

NO →

ST3 — $SER_{total} \leq THR\_SER2_{total}$

NO →

YES ↓

ST2 — Set All Subbands as Target To Be Suppressed $sf(n)=1,$ $n=1,2, \cdots M$

ST4 — $n=0$

ST5 — Subband $n \leq M$

ST6 — $SER(n) \leq THR\_SER(n)$

NO →

YES ↓

ST7 — Set Subband N as Target To Be Suppressed $sf(n)=1$

ST8 — Set Subband N as Target Not To Be Suppressed $sf(n)=0$

ST11 — Set All Subbands as Target Not To Be Suppressed $sf(n)=0,$ $n=1,2, \cdots M$

ST9 — $n=n+1$

ST10 — Subband

End

EP 1 684 442 A1

# FIG.3

EP 1 684 442 A1

# FIG.4

Transmission Signal Power
Us(n)[dB]

Amount of Suppression
eg(n)=Ns(n)-Us(n)[dB]

Background-Noise Level
Ns(n)[dB]

Subband

# FIG.5

Signal Power

Region Having High Ratio
of Echo Component

☐ Yet-To-Be Echo-Cancelled

▨ Echo-Cancelled

▨ Echo-Suppressed

- - - Noise Level

Frequency

17

# FIG.6

Echo Suppressing Unit — 2

Near-End Speaker Voice / Background Noise → Sin

Sout / Echo / S(t)

Rin / r(t)

31 — FFT Processing Unit → $R(j)$

33 — Echo Coupling Amount Estimating Unit — $L_{total}$

34 — Signal-To-Echo Ratio Estimating Unit → $SER_{total}$

35 — Subband-Signal-To-Echo Ratio Estimating Unit → $SER(n)$

$L(n)$

25 — Subband-To-Be-Suppressed Determining Unit → $Sf(n)$

26 — Noise-Spectrum Estimating Unit → $Ns(n)$

27 — Subband Power Calculating Unit → $Us(n)$

28 — Echo Suppression Amount Calculating Unit → $eg(n)$

32 — FFT Processing Unit → $S(j)$

29 — Echo Suppression Processing Unit → $O(j)$

30 — IFFT Processing Unit → $o(t)$

Rout

EP 1 684 442 A1

18

# FIG.7

Start

$$10\log_{10}\left(\sum_{j=0}^{N-1}\left|S(j)\right|^2 \Big/ \sum_{j=0}^{N-1}\left|R(j)\right|^2\right) < \text{THR\_RST}$$

ST21

NO

YES

Update Total Amount of Echo Coupling

ST22

Update Amount of Echo Coupling for Each Subband

ST23

End

FIG.8

EP 1 684 442 A1

<div align="center">

### INTERNATIONAL SEARCH REPORT

</div>

| | International application No. |
|---|---|
| | PCT/JP03/14329 |

| A. CLASSIFICATION OF SUBJECT MATTER |
|---|
| Int.Cl$^7$ H04B3/20, H04R3/02, H04M1/60 |
| According to International Patent Classification (IPC) or to both national classification and IPC |

| B. FIELDS SEARCHED |
|---|
| Minimum documentation searched (classification system followed by classification symbols) |
| Int.Cl$^7$ H04B3/00, H04B7/00, H04R3/00, H04M1/60 |
| Documentation searched other than minimum documentation to the extent that such documents are included in the fields searched |
| Electronic data base consulted during the international search (name of data base and, where practicable, search terms used) |

| C. DOCUMENTS CONSIDERED TO BE RELEVANT |

| Category* | Citation of document, with indication, where appropriate, of the relevant passages | Relevant to claim No. |
|---|---|---|
| X<br>Y | JP 11-331046 A (Nippon Telegraph And Telephone Corp.),<br>30 November, 1999 (30.11.99),<br>Particularly, Figs. 1, 4; Par. Nos. [0070] to [0108], [0118] to [0123]<br>(Family: none) | 1,2,7-11<br>5,13 |
| Y | JP 2001-344000 A (Toshiba Corp.),<br>14 December, 2001 (14.12.01),<br>Particularly, Par. Nos. [0035] to [0070]<br>(Family: none) | 5 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 February, 2004 (10.02.04) | 24 February, 2004 (24.02.04) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

International application No.

PCT/JP03/14329

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 10-023172 A (Matsushita Electric Industrial Co., Ltd.), 23 January, 1998 (23.01.98), Particularly, Fig. 2 (Family: none) | 13 |
| X | JP 2002-217793 A (Matsushita Electric Industrial Co., Ltd.), 02 August, 2002 (02.08.02), Full text; all drawings & EP 1229709 A2 & CN 1367602 A & US 2002/0126855 A1 | 1,2,5,7-11, 13 |
| A | JP 2000-224081 A (NEC Corp.), 11 August, 2000 (11.08.00), (Family: none) | 6 |

Form PCT/ISA/210 (continuation of second sheet) (July 1998)